# FASCICULE DE BREVET EUROPEEN

(11) **EP 4 257 006 B1**
(45) Date de publication et mention de la délivrance du brevet: **22.10.2025**
(21) Numéro de dépôt: 23166615.7
(22) Date de dépôt: 04.04.2023
(51) Int. Cl.: A45F 4/10, B62B 15/00, B62B 17/06

(54) **LUGE CONVERTIBLE EN SAC À DOS**
IN RUCKSACK UMWANDELBARER SCHLITTEN
SLEDGE CONVERTIBLE INTO A RUCKSACK

(30) Priorité: 07.04.2022 FR 2203208
(43) Date de publication de la demande: 11.10.2023
(73) Titulaire: Decathlon, 59650 Villeneuve d'Ascq (FR)
(72) Inventeur: BOUSCH, Thomas, 59650 Villeneuve d'Ascq (FR); BONNAFOUS, Jean-Baptiste, 59650 Villeneuve d'Ascq (FR); DESCAMPS, Noé, 59650 Villeneuve d'Ascq (FR); DIHLMANN, Marcus, 59650 Villeneuve d'Ascq (FR); MAILLARD, Octavien, 59650 Villeneuve d'Ascq (FR)
(74) Mandataire: Sayettat, Julien Christian

(56) Documents cités:
- DE-A1- 19 805 505
- FR-A- 1 301 337
- FR-A- 1 410 050
- GB-A- 2 507 122
- US-A- 5 553 875

## Description

L'invention concerne une luge, ainsi qu'un ensemble comprenant une telle luge et une paire de raquettes à neige.

Elle s'applique en particulier aux luges destinées à la pratique d'une activité sportive, notamment de type rando-luge, afin de permettre à un randonneur de glisser sur un terrain neigeux.

Ce type de luges forme un sac présentant un espace de stockage du matériel nécessaire au randonneur, ledit sac pouvant être porté, notamment sur le dos, lors des phases de marche, et pouvant, lors des phases de glisse, contenir les équipements de marche telle qu'une paire de raquettes à neige ou de bâtons.

Le document DE-19 805 505 décrit un sac à dos de randonnée convertible en luge, comprenant une coque formant un espace de stockage dans une configuration de portage et présentant un fond dont la surface externe est agencée pour permettre la glisse dans une configuration de glisse.

En particulier, l'espace de stockage est fermé par une paroi supérieure souple qui présente une zone arrière rigidifiée formant une assise pour l'utilisateur en configuration de glisse, des bretelles pouvant être fixées sur la coque pour permettre le portage du sac sur le dos.

Cette solution ne donne pas entière satisfaction en ce que la surface de glisse de la coque présente des moyens de fixation réversible des bretelles, ce qui peut altérer l'efficacité de ladite surface lors de l'utilisation en configuration de glisse.

En outre, la paroi supérieure souple ne permet pas de conférer une bonne assise pour l'utilisateur, notamment en portant une poignée de maintien, tout en garantissant l'intégrité de l'espace de stockage lors de l'utilisation en configuration de glisse.

Le document GB-2 507 122 A décrit une luge formée de deux coques creuses connectées de façon pivotante par une charnière de sorte à être déplaçables entre une configuration dépliée de glisse et une configuration fermée de portage.

L'invention vise à perfectionner l'art antérieur en proposant notamment une luge qui est convertible en sac à dos, dans laquelle les configurations de glisse et de portage sont optimisées conjointement relativement à leur fonction respective de glisse et de stockage.

A cet effet, selon un premier aspect, l'invention propose une luge comprenant une coque inférieure présentant un fond dont la surface externe est agencée pour permettre la glisse de ladite luge, ledit fond étant bordé par une paroi périphérique qui s'étend depuis ledit fond jusqu'à un bord libre, ladite luge comprenant :
- une coque supérieure qui est agencée pour pouvoir recouvrir réversiblement au moins une partie du bord libre en formant un espace de stockage entre lesdites coques de façon à former un sac ; et
- une structure de portage dudit sac, ladite structure de portage étant équipée d'un dispositif de fixation sur ledit sac,
la coque supérieure étant agencée pour permettre l'assise sur elle d'au moins un utilisateur au-dessus de l'espace de stockage fermé dans une configuration de glisse, ladite coque supérieure étant équipée d'un dispositif de fixation complémentaire du dispositif de fixation de la structure de portage pour permettre la fixation de ladite structure sur ladite coque supérieure dans une configuration de portage du sac.

Selon un second aspect, l'invention propose un ensemble comprenant une telle luge et une paire de raquettes à neige, l'espace de stockage étant configuré pour pouvoir loger au moins lesdites raquettes dans le sac.

D'autres particularités et avantages de l'invention apparaîtront dans ladescription qui suit, faite en référence aux figures 1 à 8 annexées,
[Fig.1],
[Fig.2],
[Fig.3],
[Fig.4],
[Fig.5],
[Fig.6],
[Fig.7], et
[Fig.8] qui représentent chacune en perspective une luge selon l'invention durant respectivement une étape de son passage de la configuration de portage à la configuration de glisse.

En relation avec ces figures, on décrit ci-dessous une luge convertible en sac à dos, notamment destinée à la pratique d'une activité sportive de type rando-luge, ainsi qu'un ensemble comprenant une telle luge et une paire de raquettes à neige.

La luge comprend une coque inférieure 1 qui présente un fond 2 dont la surface externe est agencée pour permettre la glisse de ladite luge, ledit fond étant bordé par une paroi périphérique 3 qui s'étend depuis ledit fond jusqu'à un bord libre 4.

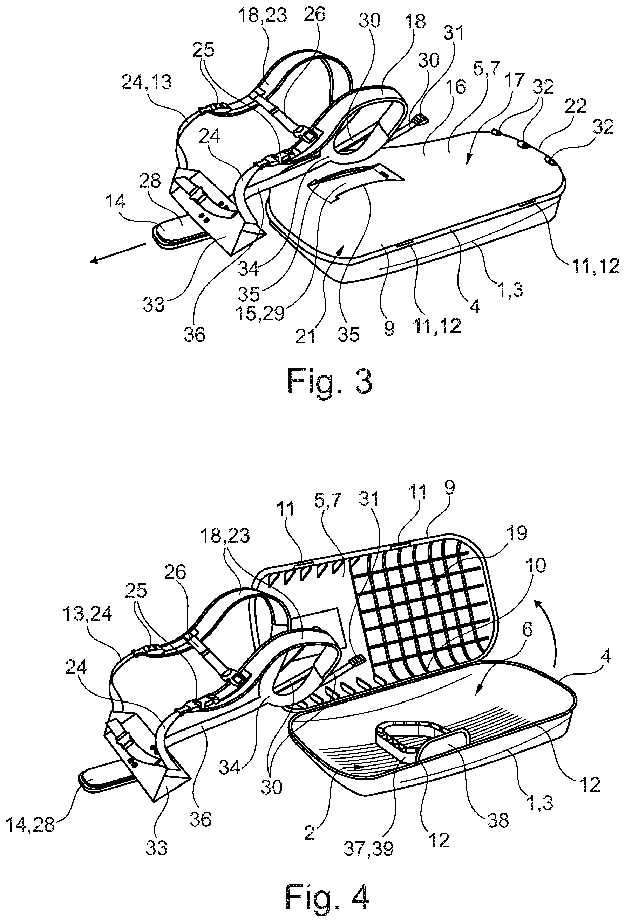

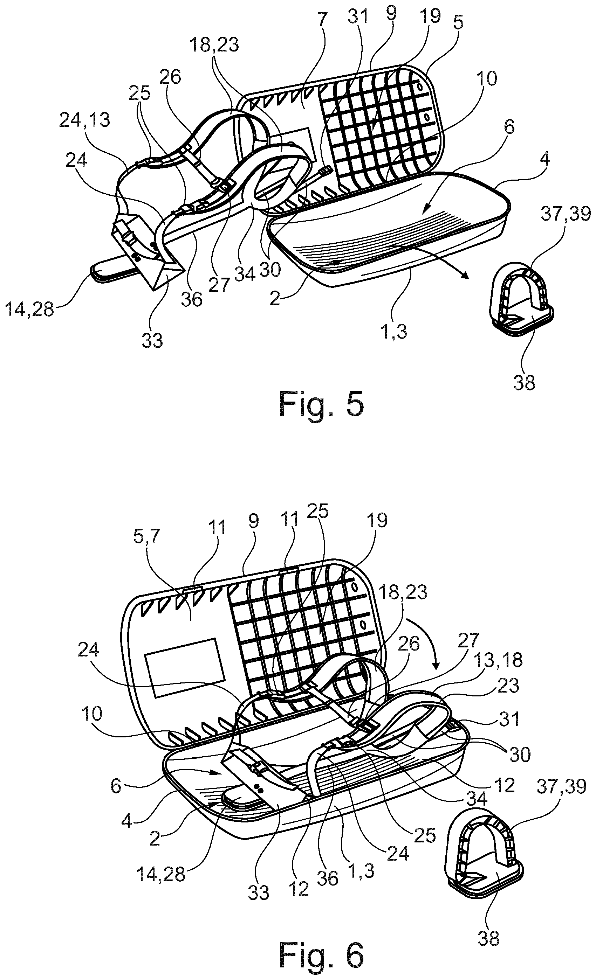

A cet effet, la surface de glisse peut présenter un réseau de motifs en creux et/ou en reliefs agencés pour faciliter sa glisse sur un terrain neigeux, notamment sous forme de nervures longitudinales (visibles au travers du fond 2 sur les figures 4à 6).

La luge comprend en outre une coque supérieure 5 qui est agencée pour pouvoir recouvrir réversiblement au moins une partie, notamment la totalité, du bord libre 4, en formant un espace de stockage 6 entre lesdites coques de façon à former un sac. En particulier, la coque supérieure 5 peut venir fermer l'espace de stockage 6 de façon étanche.

Chaque coque 1, 5 peut être réalisée en une seule pièce, notamment par injection et moulage d'un matériau polymère rigide ou semi-rigide. Sur les figures, les coques 1, 5 présentent toutes deux une forme sensiblement rectangulaire, notamment symétrique par rapport à un plan vertical longitudinal.

Dans la description, les termes de positionnement dans l'espace sont choisis par rapport à l'orientation de la luge telle que représentée sur les figures. Ainsi, les termes « supérieur » et « inférieur » sont pris relativement à une disposition respectivement éloignée et proche de la surface externe du fond sur laquelle la luge glisse. Par ailleurs, le terme « longitudinal » se rapporte à une direction correspondant à la dimension maximale de la luge, et le terme « transversal » se rapporte à une direction perpendiculaire à cette dimension maximale.

La coque supérieure 5 présente un plateau supérieur 7 qui est bordé par une paroi périphérique 8, ladite paroi périphérique présentant un bord libre 9 destiné à coopérer avec le bord libre 4 de la coque inférieure 1 pour former l'espace de stockage 6.

La paroi périphérique supérieure 8 présente une hauteur et une forme adaptées de manière à former un espace de stockage 6 de volume suffisant pour pouvoir y ranger le matériel nécessaire à la pratique de l'activité sportive, sans avoir à recourir à un sac supplémentaire.

En particulier, dans le cas où la luge est commercialisée avec des raquettes à neige, l'espace de stockage 6 est configuré pour pouvoir y loger au moins lesdites raquettes à neige, ainsi que des bâtons de randonnée, ou tout autre type de matériel adapté à la randonnée et/ou au camping (gourde, nourriture, vêtements de rechange, réchaud...).

En relation avec les figures 4 à 6, la coque supérieure 5 est montée sur le bord libre 4 de la coque inférieure 1 au moyen d'une charnière 10 permettant d'ouvrir et de fermer l'espace de stockage 6. Par ailleurs, les coques 1, 5 présentent des moyens d'association réversible 11, 12 formés sur leurs bords libres 4, 9 respectifs, en étant opposés à la charnière 10 par rapport à un plan vertical médian de la luge.

Dans le mode de réalisation représenté, la charnière 10 et les moyens d'association réversible 11, 12 sont formés chacun sur respectivement une portion longitudinale des bords libres 4, 9. En particulier, le bord libre supérieur 9 présente deux ergots 11 espacés longitudinalement, chacun destiné à être associé réversiblement par clipsage dans respectivement un logement 12 formé à cet effet sur le bord libre inférieur 4.

La coque supérieure 5 est agencée pour permettre l'assise sur elle d'au moins un utilisateur au-dessus de l'espace de stockage 6 dans une configuration de glisse. La rigidité des coques 1, 5, et notamment celle de la coque supérieure 5, permet de garantir l'intégrité de l'espace de stockage 6 lors de l'utilisation en configuration de glisse.

En particulier, les coques 1, 5 sont configurées pour éviter un affaissement sous l'effet du poids du(des) utilisateur(s) lors de l'utilisation de la luge en configuration de glisse, afin de garantir le confort du(des)dit(s) utilisateur(s) et de préserver l'intégrité du matériel rangé dans l'espace de stockage 6.

La luge comprend en outre une structure 13 de portage du sac, ladite structure étant équipée d'un dispositif 14 de fixation sur ledit sac. La coque supérieure 5 est équipée d'un dispositif 15 de fixation complémentaire de celui de la structure de portage 14, afin de permettre la fixation de ladite structure sur ladite coque supérieure dans une configuration de portage du sac.

Ainsi, la coque inférieure 1 et notamment sa surface externe de glisse peut être dépourvue de moyens de fixation de la structure de portage 13, ce qui permet de pouvoir optimiser l'efficacité de ladite surface lors de l'utilisation en configuration de glisse.

De façon avantageuse, la surface externe 16 du plateau supérieur 7 est adaptée pour améliorer le confort de l'utilisateur lorsqu'il porte la luge sur son dos et/ou lorsqu'il s'assoit sur elle dans la configuration de glisse.

A cet effet, la surface externe supérieure 16 peut présenter au moins une empreinte en creux, afin de former une zone d'assise 17 pour l'utilisateur. En particulier, la zone d'assise 17 peut s'étendre sur une partie importante, notamment sur une moitié transversale, de la surface externe supérieure 16, de manière à permettre à un utilisateur adulte de s'y asseoir dans la configuration de glisse.

La structure de portage 13 peut également comprendre une paroi de recouvrement d'au moins une portion de la surface externe supérieure 16, ladite paroi pouvant être réalisée en un matériau élastomère, par exemple une mousse.

La coque supérieure 5 peut également comprendre une structure de rigidification 19, notamment sous la forme d'un réseau de nervures transversales et longitudinales entrecroisées, qui s'étend sous le plateau supérieur 7 au niveau de la zone d'assise 17, afin de la renforcer pour lui permettre de mieux résister aux déformations sous l'effet du poids du(des) utilisateur(s) assis sur elle.

La structure de portage 13 comprend des bretelles 18 pour le portage du sac sur le dos, lesdites bretelles s'étendant longitudinalement entre deux côtés qui sont destinés à être associés chacun à proximité de respectivement un bord transversal 21, 22 de la surface externe supérieure 16 dans la configuration de portage.

Chaque bretelle 18 comprend une portion 23 de portage du sac qui s'étend longitudinalement depuis un côté de la structure de portage 13, en étant équipée d'une garniture, par exemple réalisée en mousse, destinée à venir en appui sur respectivement une épaule de l'utilisateur lors dudit portage.

Chaque bretelle 18 comprend en outre une portion 24 de réglage en longueur, ladite portion comprenant une sangle avec une première extrémité associée à l'autre côté de la structure de portage 13, ainsi qu'une seconde extrémité libre qui coulisse dans un passant 25 associé à la portion de portage 23.

Pour éviter leur glissement des épaules de l'utilisateur, les bretelles 18 sont équipées de moyens d'association réversible, notamment sous la forme d'une sangle transversale 26 comprenant une première extrémité fixée de manière permanente à une bretelle 18 et de manière réversible à l'autre bretelle, notamment au moyen d'un système de type boucle clip 27, de sorte à s'étendre entre lesdites bretelles et sur la poitrine de l'utilisateur. En particulier, la sangle 26 peut être réglable, selon la morphologie de l'utilisateur.

Dans le mode de réalisation représenté, la structure de portage 13 est fixée de façon amovible sur la coque supérieure 5, notamment pour pouvoir être rangée dans la configuration de glisse, afin de ne pas gêner l'utilisateur. En particulier, l'espace de stockage 6 est configuré pour pouvoir loger la structure de portage 13 lorsqu'elle n'est pas utilisée.

En variante, la structure de portage 13 peut être fixée de façon permanente à la luge sur un premier côté, tout en étant détachable de ladite luge sur son côté opposé, afin de pouvoir être pliée et rangée dans l'espace de stockage 6 ou dans un compartiment annexe de la luge à proximité dudit premier côté.

Le dispositif de fixation 14 de la structure de portage 13 comprend une platine 28 qui est destinée à venir se fixer dans un logement 29 formé dans la surface externe supérieure 16 et/ou au moins une sangle 30 équipée d'un connecteur 31 qui est destiné à venir s'engager dans une boucle 32 solidaire de ladite surface externe supérieure.

Sur les figures, un premier côté de la structure de portage 13 est équipé d'une platine 28. Pour ce faire, le premier côté présente un bandeau supérieur 33 sous lequel la platine 28 est associée, les portions de réglage 24 des bretelles 18 étant chacune associée à respectivement une extrémité dudit bandeau.

Par ailleurs, l'autre côté de la structure de portage 13 est équipé d'au moins une sangle 30, et notamment d'au moins deux sangles 30 de fixation, un bord transversal 22 de la surface externe supérieure 16 présentant deux boucles 32 espacées transversalement pour la fixation du connecteur 31 de respectivement une desdites sangles.

Les portions de portage 23 se rejoignent, au niveau de leurs extrémités opposées aux passants 25 de réglage, en une zone commune 34 depuis laquelle trois sangles de fixation 30 s'étendent sensiblement longitudinalement, en présentant chacune une extrémité libre équipée d'un connecteur 31 destiné à être associé à l'une des trois boucles 32 fixées à cet effet sur le bord 22 de la surface externe supérieure 16.

Le logement 29 est bordé par deux rails longitudinaux 35, sous lesquels la platine 28 est agencée pour venir s'engager en coulissement lors du passage en configuration de portage.

En particulier, au moins une sangle de fixation 30 est agencée pour, lorsque son connecteur 31 est associé à une boucle 32, empêcher le coulissement de la platine 28 hors des rails 35.

La structure de portage 13 comprend une sangle centrale 36 qui s'étend longitudinalement entre le bandeau supérieur 33 et la zone 34 d'association commune des bretelles 18 et des sangles 30 de fixation, ladite sangle centrale et lesdites sangles de fixation présentant chacune une longueur adaptée pour être tendues sur la surface externe supérieure 16 lorsque les connecteurs 31 sont fixés aux boucles 32.

La luge comprend en outre une structure 37 de maintien de l'utilisateur sur le sac en configuration de glisse, ladite structure de maintien étant équipée d'un dispositif 38 de fixation amovible sur le sac.

En particulier, l'espace de stockage 6 est configuré, notamment par ses dimensions, pour pouvoir loger la structure de maintien 37 dans le sac, notamment en plus de la structure de portage 13, mais également en plus du matériel nécessaire à la pratique de l'activité, par exemple des raquettes à neige et/ou des bâtons de randonnée.

La surface externe supérieure 16 est équipée d'un dispositif de fixation complémentaire au dispositif 37 de la structure de maintien, de manière à permettre sa fixation réversible sur la coque supérieure 5.

De façon avantageuse, la surface externe supérieure 16 est équipée d'un dispositif de fixation complémentaire qui comprend des moyens communs 15, 35 pour la fixation sélectivement des structures de portage 13 ou de maintien 37, selon la configuration d'utilisation choisie pour la luge.

A cet effet, les structures de portage 13 et de maintien 37 sont chacune équipée d'une platine 28, 38 qui est destinée à pouvoir se fixer sélectivement dans le logement 29 formé dans la coque supérieure 5.

Sur les figures, la structure de maintien 37 comprend une poignée de préhension 39 pour un utilisateur assis sur la coque supérieure 5 en configuration de glisse, ladite poignée étant formée en une seule pièce avec la platine 38 de fixation sur le sac, notamment par moulage d'un matériau thermoplastique. En particulier, la structure de maintien 37 permet un guidage de la luge par l'utilisateur.

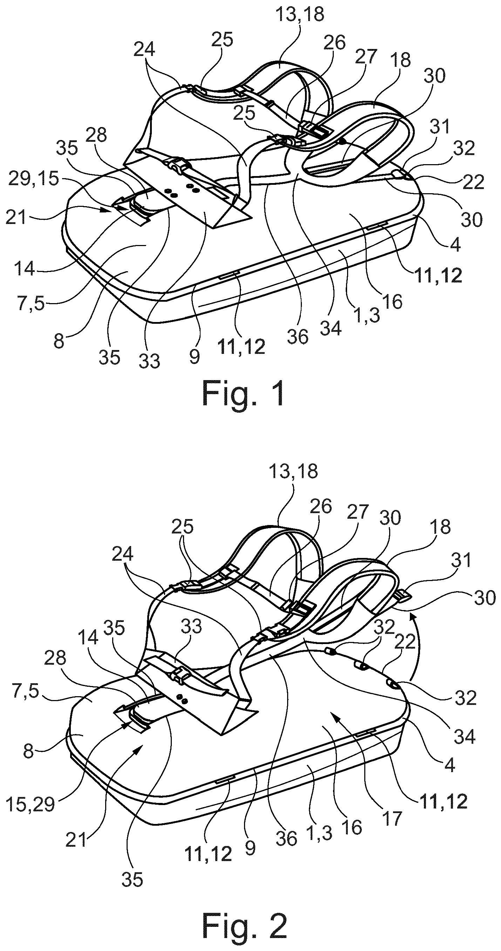

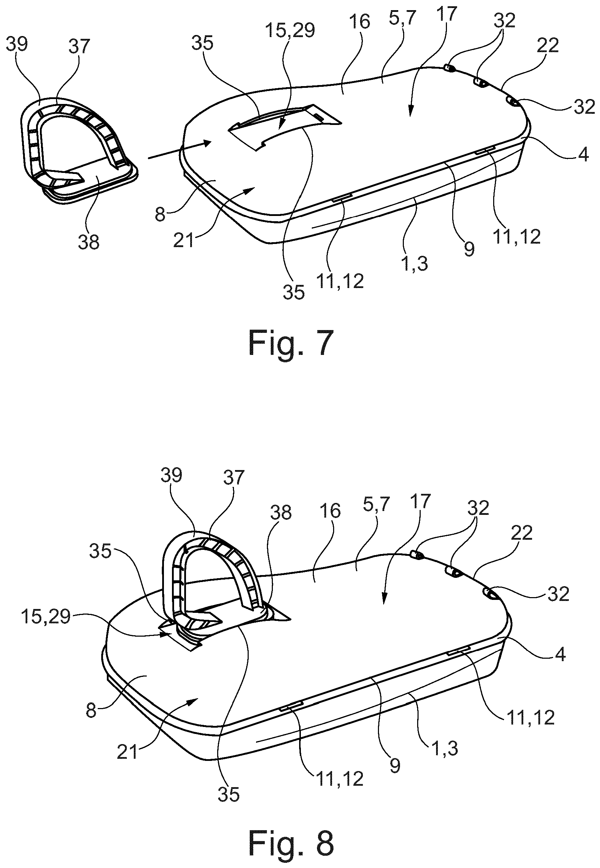

On décrit à présent les différentes étapes que l'utilisateur doit réaliser pour passer de la configuration de portage du sac (figure 1) à la configuration de glisse (figure 8).

Dans un premier temps, l'utilisateur détache les connecteurs 31 des sangles de fixation 30 de leurs boucles 32 respectives (figure 2), de manière à pouvoir faire coulisser la platine 28 hors des rails 35 du logement 29, comme représenté sur la figure 3.

Ensuite, l'utilisateur ouvre l'espace de stockage 6 en désactivant les moyens 11, 12 d'association réversible des coques 1, 5, de manière à pouvoir soulever la coque supérieure 5, afin d'accéder audit espace pour y ranger la structure de portage 13 et en extraire la structure de maintien 37 (figures 4, 5 et 6).

Enfin, l'utilisateur rabat la coque supérieure 5 sur la coque inférieure 1 et actionne leurs moyens 11, 12 d'association réversible, puis fixe la structure de maintien 37 en faisant coulisser sa platine 38 sous les rails 35, de manière à la disposer dans le logement 29 (figures 7, 8).

## Revendications

1. Luge comprenant une coque inférieure (1) présentant un fond (2) dont la surface externe est agencée pour permettre la glisse de ladite luge, ledit fond étant bordé par une paroi périphérique (3) qui s'étend depuis ledit fond jusqu'à un bord libre (4), ladite luge comprenant :
- une coque supérieure (5) qui est agencée pour pouvoir recouvrir réversiblement au moins une partie du bord libre (4) en formant un espace de stockage (6) entre lesdites coques de façon à former un sac ; et
- une structure (13) de portage dudit sac, ladite structure de portage étant équipée d'un dispositif (14) de fixation sur ledit sac,
ladite luge étant **caractérisée en ce que** la coque supérieure (5) est agencée pour permettre l'assise sur elle d'au moins un utilisateur au-dessus de l'espace de stockage (6) fermé
dans une configuration de glisse, ladite coque supérieure étant équipée d'un dispositif (15) de fixation complémentaire du dispositif de fixation (14) de la structure de portage (13) pour permettre la fixation de ladite structure sur ladite coque supérieure dans une configuration de portage du sac.

2. Luge selon la revendication 1, **caractérisée en ce que** la structure de portage (13) comprend des bretelles (18) pour le portage du sac sur le dos.

3. Luge selon l'une des revendications 1 ou 2, **caractérisée en ce que** la structure de portage (13) est fixée de façon amovible sur la coque supérieure (5).

4. Luge selon la revendication 3, **caractérisée en ce que** le dispositif de fixation (14) de la structure de portage (13) comprend une platine (28) qui est destinée à venir se fixer dans un logement (29) formé dans la coque supérieure (5) et/ou au moins une sangle (30) équipée d'un connecteur (31) qui est destiné à venir s'engager dans une boucle (32) solidaire de la coque supérieure (5).

5. Luge selon la revendication 4, **caractérisée en ce que** la structure de portage (13) comprend au moins deux sangles (30) de fixation, un bord (22) de la coque supérieure (5) présentant deux boucles (32) espacées transversalement pour la fixation du connecteur (31) de respectivement une desdites sangles.

6. Luge selon l'une des revendications 4 ou 5, **caractérisée en ce que** le logement (29) est bordé par deux rails (35), la platine (28) étant agencée pour venir s'engager en coulissement sous lesdits rails.

7. Luge selon la revendication 6, **caractérisée en ce qu'**au moins une sangle (30) est agencée pour, lorsque son connecteur (31) est associé à une boucle (32), empêcher le coulissement de la platine (28) hors des rails (35).

8. Luge selon l'une quelconque des revendications 1 à 7, **caractérisée en ce qu'**elle comprend en outre une structure (37) de maintien de l'utilisateur sur le sac en configuration de glisse, ladite structure de maintien étant équipée d'un dispositif de fixation amovible sur le sac.

9. Luge selon la revendication 8, **caractérisée en ce que** la coque supérieure (5) est équipée d'un dispositif (15) de fixation complémentaire au dispositif de la structure de maintien (37) pour permettre sa fixation réversible sur ladite coque supérieure (5).

10. Luge selon l'une des revendications 8 ou 9, **caractérisée en ce que** la coque supérieure (5) est équipée d'un dispositif de fixation complémentaire (15) qui comprend des moyens communs (29, 35) pour la fixation sélectivement des structures de portage (13) ou de maintien (37).

11. Luge selon l'une quelconque des revendications 8 à 10, **caractérisée en ce que** la structure de maintien (37) comprend une poignée (39) de préhension pour l'utilisateur assis sur la coque supérieure (5) en configuration de glisse.

12. Luge selon l'une quelconque des revendications 1 à 11, **caractérisée en ce que** la coque supérieure (5) est montée sur le bord libre (4) de la coque inférieure (1) au moyen d'une charnière (10) permettant d'ouvrir et de fermer l'espace de stockage (6).

13. Luge selon l'une quelconque des revendications 1 à 12, **caractérisée en ce que** les coques inférieure (1) et supérieure (5) sont réalisées à base d'un matériau polymère rigide ou semi-rigide.

14. Luge selon l'une quelconque des revendications 1 à 13, **caractérisée en ce que** l'espace de stockage (6) est configuré pour pouvoir loger au moins la structure de portage (13) et/ou l'éventuelle structure de maintien (37) dans le sac.

15. Ensemble comprenant une luge selon l'une quelconque des revendications 1 à 14 et une paire de raquettes à neige, l'espace de stockage (6) étant configuré pour pouvoir loger au moins lesdites raquettes dans le sac.

## Patentansprüche

1. Schlitten, umfassend eine untere Schale (1), die einen Boden (2) aufweist, dessen Außenfläche angeordnet ist, um das Gleiten des Schlittens zu ermöglichen, wobei der Boden von einer Umfangswand (3) begrenzt wird, die sich von dem Boden bis zu einem freien Rand (4) erstreckt, der Schlitten umfassend:
- eine obere Schale (5), die angeordnet ist, um reversibel mindestens einen Abschnitt des freien Rands (4) abzudecken, indem sie einen Stauraum (6) zwischen den Schalen bildet, um eine Tasche zu bilden; und
- eine Struktur (13) zum Tragen der Tasche, wobei die Tragstruktur mit einer Vorrichtung (14) zur Befestigung an der Tasche ausgestattet ist,
wobei der Schlitten **dadurch gekennzeichnet ist, dass** die obere Schale (5) angeordnet ist, um zu ermöglichen, dass mindestens ein Benutzer oberhalb des geschlossenen Stauraums (6) in einer Gleitkonfiguration darauf sitzt, wobei die obere Schale mit einer Vorrichtung (15) zur Befestigung ausgestattet ist, die komplementär zu der Befestigungsvorrichtung (14) der Tragstruktur (13) ist, um in einer Tragkonfiguration der Tasche die Befestigung der Struktur an der oberen Schale zu ermöglichen.

2. Schlitten nach Anspruch 1, **dadurch gekennzeichnet, dass** die Tragstruktur (13) Schultergurte (18) zum Tragen der Tasche auf dem Rücken umfasst.

3. Schlitten nach einem der Ansprüche 1 oder 2, **dadurch gekennzeichnet, dass** die Tragstruktur (13) abnehmbar an der oberen Schale (5) befestigt ist.

4. Schlitten nach Anspruch 3, **dadurch gekennzeichnet, dass** die Befestigungsvorrichtung (14) der Tragstruktur (13) eine Platte (28), die dazu bestimmt ist, in einer Aufnahme (29) befestigt zu werden, die in der oberen Schale (5) gebildet ist, und/oder mindestens einen Gurt (30), der mit einem Verbinder (31) ausgestattet ist, der dazu bestimmt ist, in eine Schließe (32) einzugreifen, die fest mit der oberen Schale (5) verbunden ist, umfasst.

5. Schlitten nach Anspruch 4, **dadurch gekennzeichnet, dass** die Tragstruktur (13) mindestens zwei Gurte (30) zur Befestigung umfasst, wobei ein Rand (22) der oberen Schale (5) zwei quer beabstandete Schließen (32) zur Befestigung des Verbinders (31) von jeweils einem der Gurte aufweist.

6. Schlitten nach einem der Ansprüche 4 oder 5, **dadurch gekennzeichnet, dass** die Aufnahme (29) von zwei Schienen (35) begrenzt ist, wobei die Platte (28) angeordnet ist, um gleitend unter die Schienen einzugreifen.

7. Schlitten nach Anspruch 6, **dadurch gekennzeichnet, dass** mindestens ein Gurt (30) angeordnet ist, um das Herausgleiten der Platte (28) aus den Schienen (35) zu verhindern, wenn sein Verbinder (31) mit einer Schließe (32) assoziiert ist.

8. Schlitten nach einem der Ansprüche 1 bis 7, **dadurch gekennzeichnet, dass** er ferner eine Struktur (37) zum Halten des Benutzers in der Gleitkonfiguration auf der Tasche umfasst, wobei die Haltestruktur mit einer abnehmbaren Befestigungsvorrichtung an der Tasche ausgestattet ist.

9. Schlitten nach Anspruch 8, **dadurch gekennzeichnet, dass** die obere Schale (5) mit einer Befestigungsvorrichtung (15) ausgestattet ist, die komplementär zu der Vorrichtung der Haltestruktur (37) ist, um deren reversible Befestigung an der oberen Schale (5) zu ermöglichen.

10. Schlitten nach einem der Ansprüche 8 oder 9, **dadurch gekennzeichnet, dass** die obere Schale (5) mit einer zusätzlichen Befestigungsvorrichtung (15) ausgestattet ist, die gemeinsame Einrichtungen (29, 35) zur selektiven Befestigung der Trag- (13) oder Haltestruktur (37) umfasst.

11. Schlitten nach einem der Ansprüche 8 bis 10, **dadurch gekennzeichnet, dass** die Haltestruktur (37) einen Griff (39) zum Ergreifen für den Benutzer umfasst, der in der Gleitkonfiguration auf der oberen Schale (5) sitzt.

12. Schlitten nach einem der Ansprüche 1 bis 11, **dadurch gekennzeichnet, dass** die obere Schale (5) mittels eines Scharniers (10) an dem freien Rand (4) der unteren Schale (1) montiert ist, mit dem der Stauraum (6) geöffnet und geschlossen werden kann.

13. Schlitten nach einem der Ansprüche 1 bis 12, **dadurch gekennzeichnet, dass** die untere (1) und die obere (5) Schale aus einem steifen oder halbsteifen Polymermaterial gefertigt sind.

14. Schlitten nach einem der Ansprüche 1 bis 13, **dadurch gekennzeichnet, dass** der Stauraum (6) konfiguriert ist, um zumindest die Tragstruktur (13) und/oder die eventuelle Haltestruktur (37) in der Tasche unterzubringen.

15. Anordnung, umfassend einen Schlitten nach einem der Ansprüche 1 bis 14 und ein Paar Schneeschuhe, wobei der Stauraum (6) konfiguriert ist, um zumindest die Schneeschuhe in der Tasche unterbringen zu können.

## Claims

1. Sledge comprising a lower shell (1) having a bottom (2) whose external surface is arranged to allow the sliding of said sledge, said bottom being bordered by a peripheral wall (3) extending from said bottom up to a free edge (4), said sledge comprising:
- an upper shell (5) arranged to reversibly cover at least a part of the free edge (4) so as to form a storage space (6) between said shells, thereby forming a bag; and
- a structure (13) for carrying said bag, said carrying structure being provided with a device (14) for fastening it on said bag,
said sledge being **characterized in that** the upper shell (5) is arranged to allow at least one user to sit thereon above the closed storage space (6) in a sliding configuration, said upper shell being provided with a fastening device (15) complementary to the fastening device (14) of the carrying structure (13) so as to allow the attachment of said structure to said upper shell in a carrying configuration of the bag.

2. Sledge according to claim 1, **characterized in that** the carrying structure (13) comprises shoulder straps (18) for carrying the bag on the back.

3. Sledge according to one of claims 1 or 2, **characterized in that** the carrying structure (13) is removably attached to the upper shell (5).

4. Sledge according to claim 3, **characterized in that** the fastening device (14) of the carrying structure (13) comprises a plate (28) intended to be fixed in a housing (29) formed in the upper shell (5) and/or at least one strap (30) provided with a connector (31) intended to engage with a buckle (32) associated with the upper shell (5).

5. Sledge according to claim 4, **characterized in that** the carrying structure (13) comprises at least two fastening straps (30), an edge (22) of the upper shell (5) having two transversely spaced buckles (32) for fastening the connector (31) of a respective one of said straps.

6. Sledge according to one of claims 4 or 5, **characterized in that** the housing (29) is bordered by two rails (35), the plate (28) being arranged to be slidingly engaged under said rails.

7. Sledge according to claim 6, **characterized in that** at least one strap (30) is arranged so that, when its connector (31) is engaged with a buckle (32), it prevents the plate (28) from sliding out of the rails (35).

8. Sledge according to any one of claims 1 to 7, **characterized in that** it further comprises a structure (37) for retaining the user on the bag in a sliding configuration, said retaining structure being provided with a removable device for fastening it on the bag.

9. Sledge according to claim 8, **characterized in that** the upper shell (5) is provided with a fastening device (15) complementary to the fastening device of the retaining structure (37) so as to allow its reversible attachment to said upper shell (5).

10. Sledge according to one of claims 8 or 9, **characterized in that** the upper shell (5) is provided with a complementary fastening device (15) comprising common means (29, 35) for selectively fastening the carrying structure (13) or the retaining structure (37).

11. Sledge according to any one of claims 8 to 10, **characterized in that** the retaining structure (37) comprises a handle (39) for gripping by the user seated on the upper shell (5) in a sliding configuration.

12. Sledge according to any one of claims 1 to 11, **characterized in that** the upper shell (5) is mounted on the free edge (4) of the lower shell (1) by means of a hinge (10) allowing the opening and closing of the storage space (6).

13. Sledge according to any one of claims 1 to 12, **characterized in that** the lower (1) and upper (5) shells are made of a rigid or semi-rigid polymer material.

14. Sledge according to any one of claims 1 to 13, **characterized in that** the storage space (6) is configured to accommodate at least the carrying structure (13) and/or the optional retaining structure (37) in the bag.

15. Assembly comprising a sledge according to any one of claims 1 to 14 and a pair of snowshoes, the storage space (6) being configured to accommodate at least said snowshoes in the bag.
